# EUROPEAN PATENT APPLICATION

(11) **EP 4 776 217 A1**
(43) Date of publication of application: **15.07.2026**
(21) Application number: 25200788.5
(22) Date of filing: 08.09.2025
(51) Int. Cl.: G06Q 50/18

(54) **LEGAL COMPLIANCE SUPPORT SYSTEM AND LEGAL COMPLIANCE SUPPORT METHOD**

(30) Priority: 10.01.2025 JP 2025004248
(71) Applicant: Hitachi, Ltd., Tokyo 100-8280 (JP)
(72) Inventor: TANAKA, Mayuko, Tokyo, 1008280 (JP)
(74) Representative: MERH-IP Matias Erny Reichl Hoffmann Patentanwälte PartG mbB

(57) **Abstract**

Provide support for evidence record management of legal compliance in an organization. A legal compliance support system manages legal operation management information associating a legal requirement, which defines an item to be implemented for compliance with a law or regulation, with evidence record information related to an evidence record necessary to indicate that compliance with the legal requirement has been implemented. The legal compliance support system analyzes the stored evidence record and presents the evidence record that satisfies the legal requirement as an evidence record candidate to a user through an output unit. The legal compliance support system receives the evidence record selected from the evidence record candidate by the user, associates the legal requirement satisfied by the evidence record with the evidence record selected from the evidence record candidate by the user, and registers the association as compliance record management information.

## Description

### Cross-reference to Related Application

This application claims priority based on Japanese patent application(s), No. 2025- 4248 filed on January 10, 2025, the entire contents of which are incorporated herein by reference.

### BACKGROUND OF THE INVENTION

### Field of the Invention

The present invention relates to a legal compliance support system and a legal compliance support method.

### Description of the Related Art

Recently, regulations governing security of organizations such as business entities have been tightened and compliance has been made mandatory. Organizations that violate laws and regulations would be significantly impacted in their management if they lose public contracts or the like due to the violation, and thus appropriate commitment is required.

For example, Patent Literature 1 discloses a technique for extracting, from existing policy rules (codes), a plurality of policy rule candidates corresponding to requirements, obligations, and constraints extracted from legal texts. For example, Patent Literature 2 discloses a technique for evaluating the implementation status of information security measures adopted in an organization through comparison with existing evaluation criteria.

### [Citation List]

### [Patent Literature]

Patent Literature 1: Japanese Patent Laid-Open No. 2023-109716
Patent Literature 2: Japanese Patent Laid-Open No. 2010-165099

### SUMMARY OF THE INVENTION

Organizations are required to ensure legal compliance and management of evidence records for implementation of legal compliance. However, a problem with the conventional techniques described in the above-described Patent Literatures 1 and 2 has been that lack of support for evidence record management of legal compliance results in a heavy burden on organizations.

An object of the present invention, which has been made in view of the above-described problem, is to provide support for evidence record management of legal compliance in an organization.

To achieve the above-described intention, an aspect of the present invention is a legal compliance support system for supporting compliance with a law or regulation, the legal compliance support system including a processor and a storage unit that stores evidence record indicating that compliance with the law or regulation has been implemented, and the processor manages legal operation management information associating a legal requirement, which defines an item to be implemented for compliance with the law or regulation, with evidence record information related to the evidence record necessary to indicate that compliance with the legal requirement has been implemented, analyzes the evidence record retained in the storage unit and presents the evidence record that satisfies the legal requirement as an evidence record candidate to a user through an output unit, receives the evidence record selected from the evidence record candidate by the user, and associates the legal requirement satisfied by the evidence record with the evidence record selected from the evidence record candidate by the user and registers the association as compliance record management information.

According to the present invention, for example, it is possible to provide support for evidence record management of legal compliance in an organization.

The details of one or more implementations of the subject matter described in the specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a diagram illustrating the configuration of a legal compliance support system according to Embodiment 1;
FIG. 2A is a diagram illustrating the configuration of a legal operation management table according to Embodiment 1;
FIG. 2B is a diagram illustrating the configuration of a legal compliance process template according to Embodiment 1;
FIG. 2C is a diagram illustrating the configuration of a compliance record management table according to Embodiment 1;
FIG. 3 is a diagram illustrating periodic compliance requirement list display according to Embodiment 1;
FIG. 4 is a diagram illustrating compliance status detail display according to Embodiment 1;
FIG. 5 is a diagram illustrating compliance chronology display according to Embodiment 1;
FIG. 6 is a diagram illustrating equivalent/similar requirement list display according to Embodiment 1;
FIG. 7 is a flowchart illustrating main processing according to Embodiment 1;
FIG. 8 is a flowchart illustrating legal compliance notification processing according to Embodiment 1;
FIG. 9 is a flowchart illustrating legal compliance support processing according to Embodiment 1;
FIG. 10 is a diagram illustrating event compliance requirement list display according to Embodiment 2;
FIG. 11 is a flowchart illustrating event compliance support processing according to Embodiment 2;
FIG. 12 is a diagram illustrating compliance evidence record list display according to Embodiment 3; and
FIG. 13 is a flowchart illustrating evidence record list display processing according to Embodiment 3.

### DETAILED DESCRIPTION OF THE INVENTION

Embodiments of the present invention will be described below with reference to the accompanying drawings.

### Embodiment 1

In Embodiment 1, an example will be described in which evidence record of legal compliance that is periodically implemented is managed.

### Configuration of legal compliance support system 1 according to Embodiment 1

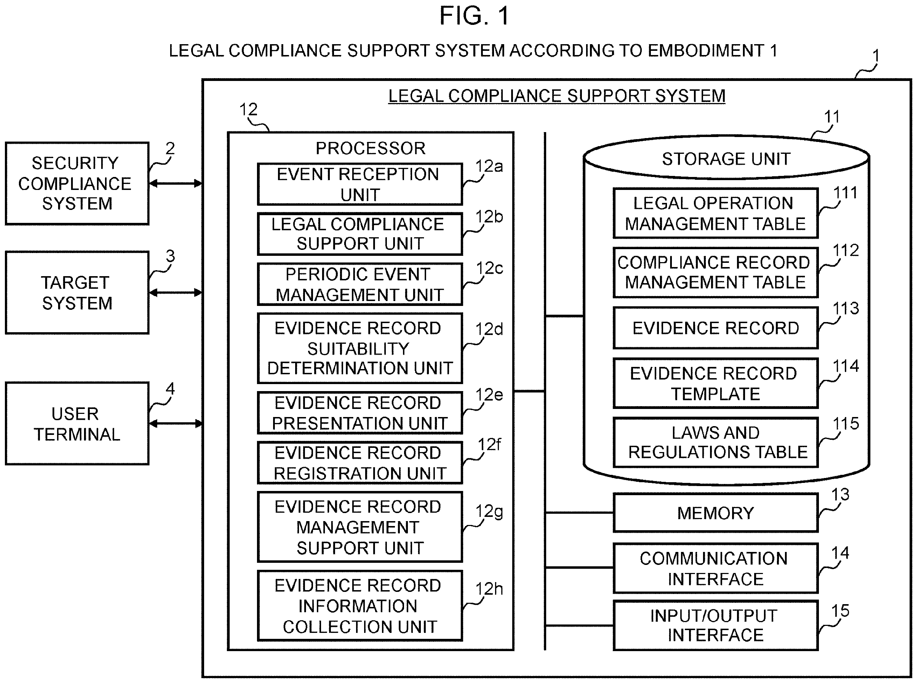

FIG. 1 is a diagram illustrating the configuration of the legal compliance support system 1 according to Embodiment 1. The legal compliance support system 1 for supporting compliance with a law or regulation is coupled to a security compliance system 2 and a target system 3. The security compliance system 2 is, for example, an incident compliance system that outputs incidence related to security of the target system 3, or a vulnerability management system that manages vulnerability of the target system 3. The target system 3 is, for example, a task system or manufacturing system that outputs evidence record to be described later. The legal compliance support system 1 is also coupled to an user terminal 4 of a user that uses the legal compliance support system 1.

The legal compliance support system 1 is a computer including a storage unit 11, a processor 12, a memory 13, a communication interface 14, and an input/output interface 15.

The storage unit 11 is constituted by a secondary storage apparatus such as a hard disk drive (HDD) or a solid state drive (SSD). The storage unit 11 stores a legal operation management table 111, a compliance record management table 112, an evidence record 113, an evidence record template 114, and a laws and regulations table 115.

In the present embodiment, information is represented in a table format, but the information is not limited to the table format may be represented in various kinds of data formats.

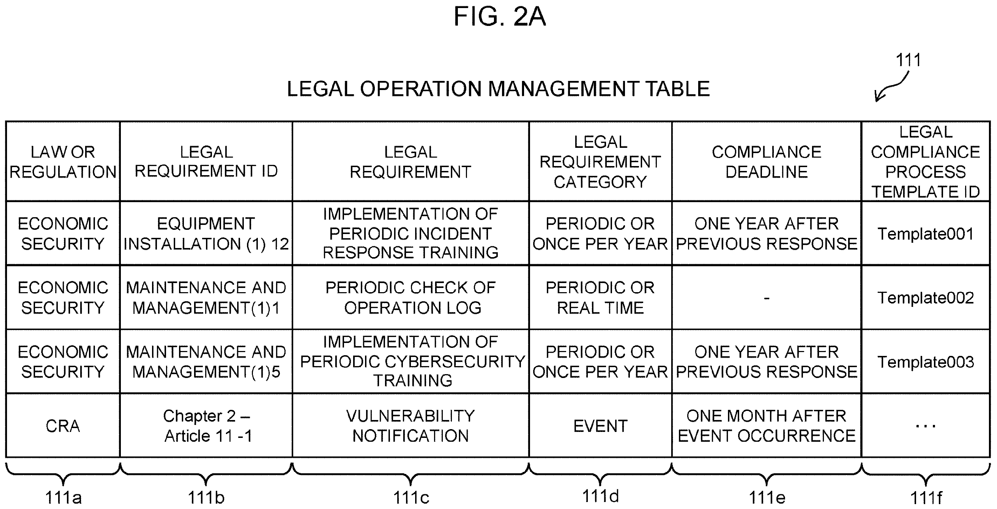

FIG. 2A is a diagram illustrating the configuration of the legal operation management table 111 according to Embodiment 1. The legal operation management table 111 includes items of law or regulation 111a, legal requirement ID 111b, legal requirement 111c, legal requirement category 111d, compliance deadline 111e, and legal compliance process template ID 111f.

The law or regulation 111a indicates the name or identification information of a law or regulation stored in the laws and regulations table 115. The legal requirement ID 111b is identification information of the legal requirement 111c. The legal requirement 111c indicates specific content of an item to be implemented in response to a law or regulation identified by the legal requirement ID 111b.

The legal requirement category 111d indicates implementation timing of an item identified by the legal requirement ID 111b and to be implemented. Examples of the legal requirement category 111d include "periodic" (execution once a year, once every six months, or in real time (repeated in an extremely short period)) and "event-driven" (execution triggered by output of an event from the security compliance system 2). The legal requirement category 111d is "periodic" in the present embodiment, and the "event-driven" category will be described later in Embodiment 2. The compliance deadline 111e indicates a deadline by which the user should implement compliance with the corresponding legal requirement.

The legal compliance process template ID 111f indicates identification information of a legal compliance process template that shows a legal compliance process for a legal requirement identified by the legal requirement ID 111b. The legal compliance process is defined by provisions of laws or regulations and policies of an organization. The legal compliance process template ID 111f indicates a legal compliance process template including, as the legal compliance process, a series of implementation contents in a task of compliance with the legal requirement identified by the legal requirement ID 111b, the evidence record 113 that is necessary, a timeline, and the like. The evidence record 113 is a file indicating that legal compliance has been implemented, in other words, a file that is evidence record for implementation of compliance task to a legal requirement.

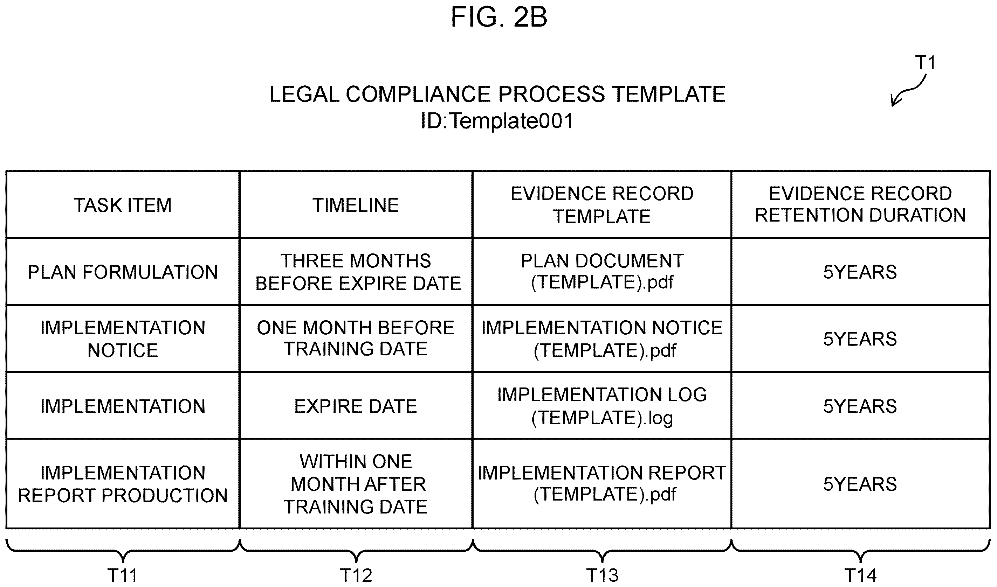

FIG. 2B is a diagram illustrating the configuration of a legal compliance process template T1 according to Embodiment 1. The legal compliance process template T1 is provided and stored as part of the legal operation management table 111 for each legal compliance process template ID 111f. For example, FIG. 2B illustrates the legal compliance process template T1 in a case where the legal compliance process template ID 111f is "Template001".

As illustrated in FIG. 2B, the legal compliance process template T1 includes items of task item T11, timeline T12, evidence record template T13, and evidence record retention duration T14. The task item T11 indicates the name or identification information of a task included in the corresponding legal compliance process. The timeline T12 indicates implementation timing of the corresponding task item. The evidence record template T13 indicates the evidence record template 114 as a template of a file that is the evidence record 113 for implementation of the corresponding task item. The evidence record retention duration T14 indicates a duration for which the evidence record 113 for implementation of the corresponding task item is to be retained.

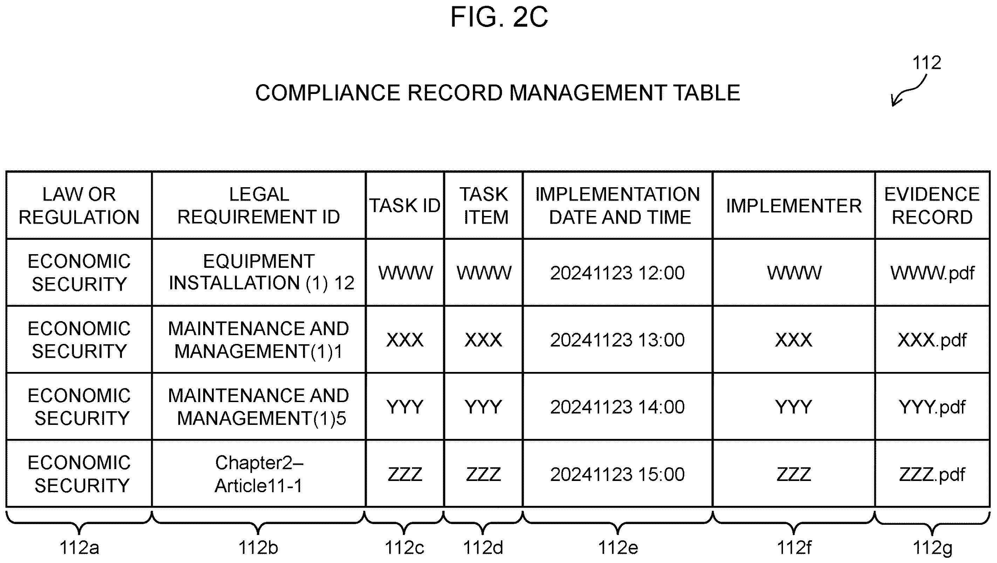

FIG. 2C is a diagram illustrating the configuration of the compliance record management table 112 according to Embodiment 1. The compliance record management table 112 manages records of compliance with a legal requirement. The compliance record management table 112 includes items of law or regulation 112a, legal requirement ID 112b, task ID 112c, task item 112d, implementation date and time 112e, implementer 112f, and evidence record 112g.

The law or regulation 112a is identical to the law or regulation 111a in the legal operation management table 111 (FIG. 2A). The legal requirement ID 112b is identical to the legal requirement ID 111b in the legal operation management table 111 (FIG. 2A). The task ID 112c indicates identification information of a task record of compliance with the legal requirement identified by the legal requirement ID 111b. The task item 112d indicates a task item included in a task identified by the task ID 112c and its contents.

The implementation date and time 112e indicates completion dates and times of all task items included in the task identified by the task ID 112c. The implementer 112f is the name of an implementer of the task identified by the task ID 112c. The evidence record 112g is identification information of the evidence record 113 for the task identified by the task ID 112c.

Returning to description of FIG. 1, the evidence record 113 indicates the file name of a file that is evidence record for implementation of a task for compliance with a legal requirement. Although not illustrated, the evidence record template 114 is an evidence record template in which an item that is necessary for evidence record and its contents are written, and is indicated as the evidence record template T13 in the legal compliance process template T1 (FIG. 2B). Although not illustrated, the laws and regulations table 115 stores a provision of a law or regulation and a compliance task (task item) in association.

The processor 12 is a processing apparatus such as a central processing unit (CPU). The processor 12 executes computer programs in cooperation with the memory 13, thereby achieving an event reception unit 12a, a legal compliance support unit 12b, a periodic event management unit 12c, an evidence record suitability determination unit 12d, an evidence record presentation unit 12e, an evidence record registration unit 12f, an evidence record management support unit 12g, and an evidence record information collection unit 12h. The computer programs that achieve these processing units may be stored in the storage unit 11 or read into the legal compliance support system 1 through a storage medium or a network.

The event reception unit 12a receives an event for which legal compliance is required and that is output from the security compliance system 2, and requests the legal compliance support unit 12b for a compliance request for the corresponding legal requirement. Upon receiving the compliance request from the event reception unit 12a or the periodic event management unit 12c, the legal compliance support unit 12b issues a legal compliance task ID and notifies legal compliance task information (such as legal requirement ID, task item, necessary evidence record, and compliance due date) to the user operating the user terminal 4. The legal compliance support unit 12b manages the progress of legal compliance corresponding to the issued legal compliance task ID.

When a notification due date arrives for a legal requirement the legal requirement category 111d of which is specified as "periodic" in the legal operation management table 111, the periodic event management unit 12c requests the legal compliance support unit 12b for a compliance request for the corresponding legal requirement.

The evidence record suitability determination unit 12d compares the content of the evidence record 113 stored in the storage unit 11 with the evidence record template 114. Then, the evidence record suitability determination unit 12d determines, by using AI or the like, which evidence record template 114 the content of the evidence record 113 is matching or similar to, in other words, which legal requirement the content corresponds to. Then, the evidence record suitability determination unit 12d outputs, as an evidence record candidate, the evidence record 113 for the legal requirement to the user through a display screen of the user terminal 4. Then, the evidence record suitability determination unit 12d retrieves information of the implementation date and time and implementer of the evidence record 113 selected from the evidence record candidate by the user and registers the information to the compliance record management table 112 together with link information of the evidence record 113.

The evidence record presentation unit 12e retrieves a list of legal requirements and the evidence record 113 for their legal compliance by referring to the compliance record management table 112 and outputs the list to the user through the display screen of the user terminal 4 as the status of compliance with the legal requirements. The output compliance status includes a compliance chronology of each legal requirement.

The evidence record registration unit 12f stores the evidence record 113 produced by the user in the storage unit 11.

The evidence record management support unit 12g manages the evidence record 113 stored in the storage unit 11. Specifically, the evidence record management support unit 12g records a log (implementer, and date and time) related to registration of a data file of the evidence record 113 to the storage unit 11, correction of the data file, and erasure of the data file. The evidence record management support unit 12g protects, from erasure, information and the evidence record 113 related to a legal requirement for which a storage duration is set.

The evidence record information collection unit 12h retrieves, from the security compliance system 2, meta information (such as kinds of logs and storage locations of log files) about implementation logs (such as access logs and operation logs) of security measures of the security compliance system 2 and stores the meta information in the storage unit 11.

The memory 13 is a primary storage apparatus that cooperates with the processor 12 when executing computer programs. The communication interface 14 is a communication apparatus for the legal compliance support system 1 to perform communication with external apparatuses such as the security compliance system 2 and the target system 3. The input/output interface 15 is an interface for the legal compliance support system 1 to input and output information to and from an external apparatus such as the user terminal 4.

### Periodic compliance requirement list display 4D1 according to Embodiment 1

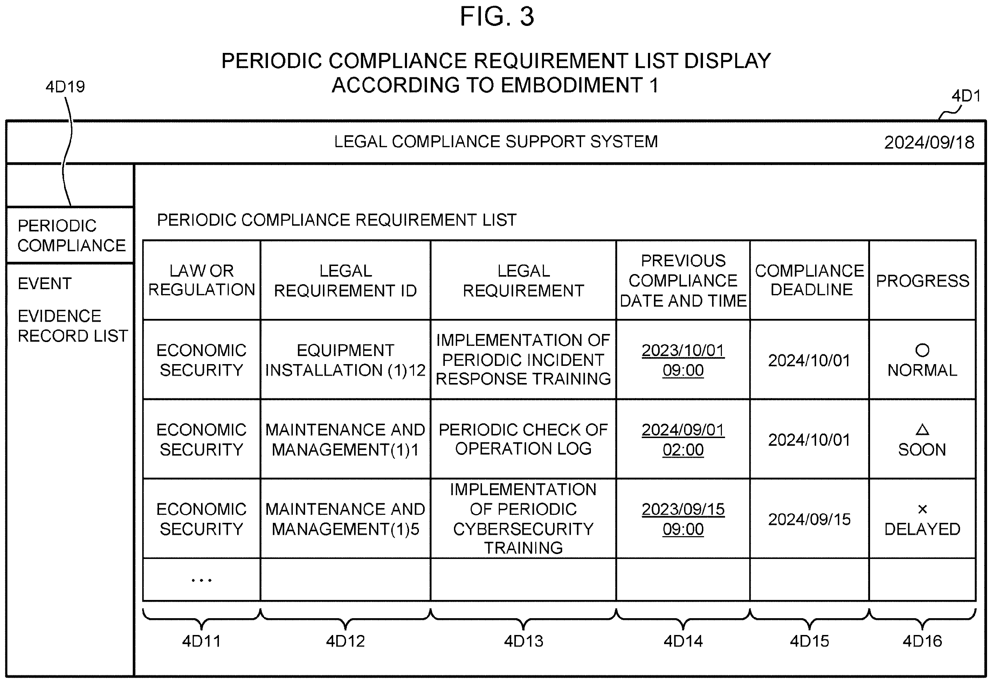

FIG. 3 is a diagram illustrating periodic compliance requirement list display 4D1 according to Embodiment 1. Display data processing of the periodic compliance requirement list display 4D1 is executed by the processor 12. The periodic compliance requirement list display 4D1 is a screen displayed on an output unit of the user terminal 4 upon selection of a periodic compliance tab 4D19 by the user.

The periodic compliance requirement list display 4D1 presents a list of legal requirements for which periodic compliance is necessary during operation of the target system 3, together with their compliance deadlines, progresses, and the like. The periodic compliance requirement list display 4D1 includes display items of law or regulation 4D11, legal requirement ID 4D12, legal requirement 4D13, previous compliance date and time 4D14, compliance deadline 4D15, and progress 4D16. The law or regulation 4D11, the legal requirement ID 4D12, the legal requirement 4D13, and the compliance deadline 4D15 are based on the legal operation management table 111. The previous compliance date and time 4D14 is based on the implementation date and time 112e corresponding to the previous compliance date and time of the corresponding legal requirement in the compliance record management table 112.

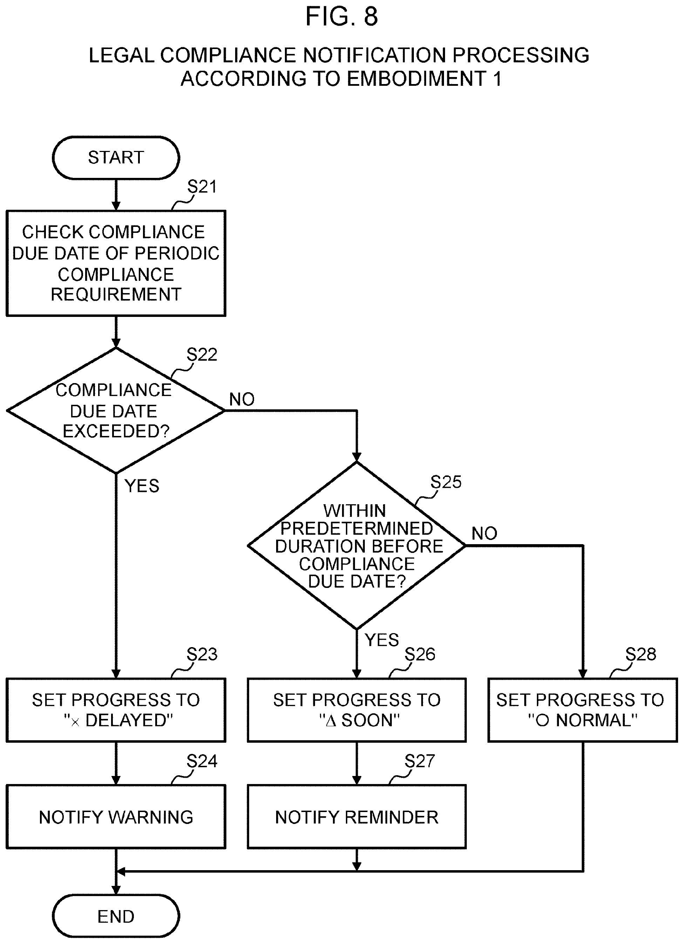

The compliance deadline 4D15 is a date obtained by adding, to the previous compliance date and time 4D14, a "number of years" (for example, "one year" in the first row of the legal operation management table 111) specified together with "periodic" of the legal requirement category 111d in the legal operation management table 111 (FIG. 2A). The progress 4D16 is input by legal compliance notification processing (FIG. 8) to be described later.

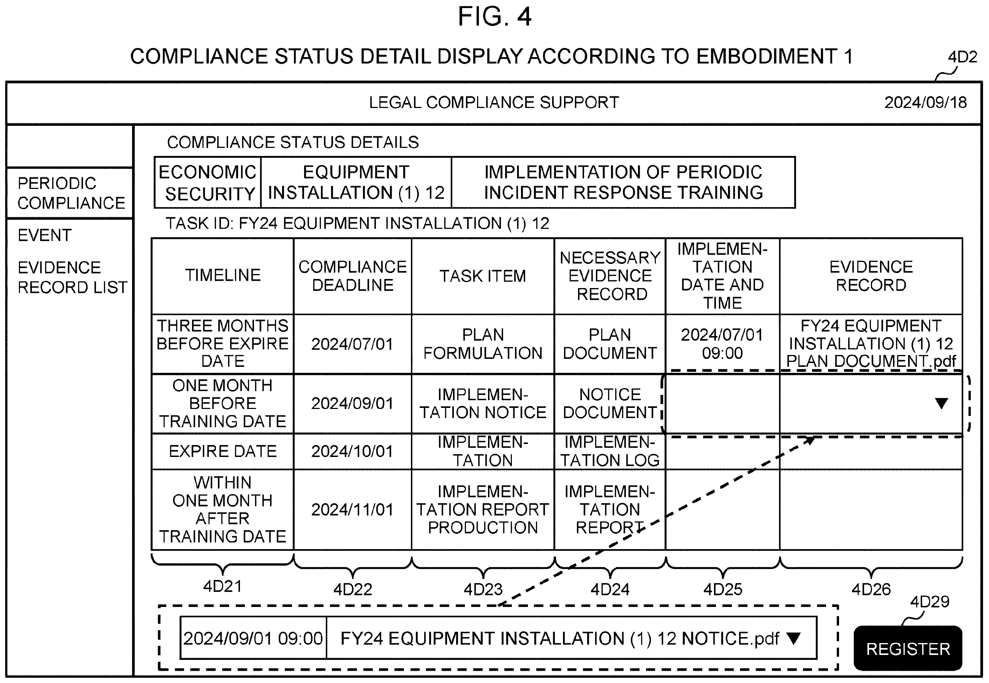

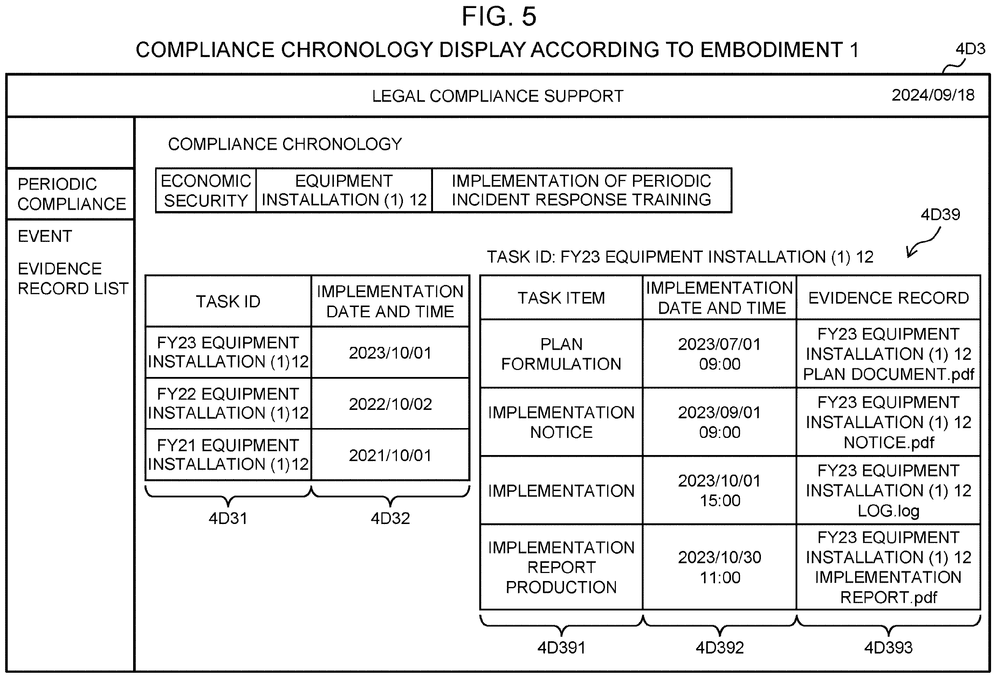

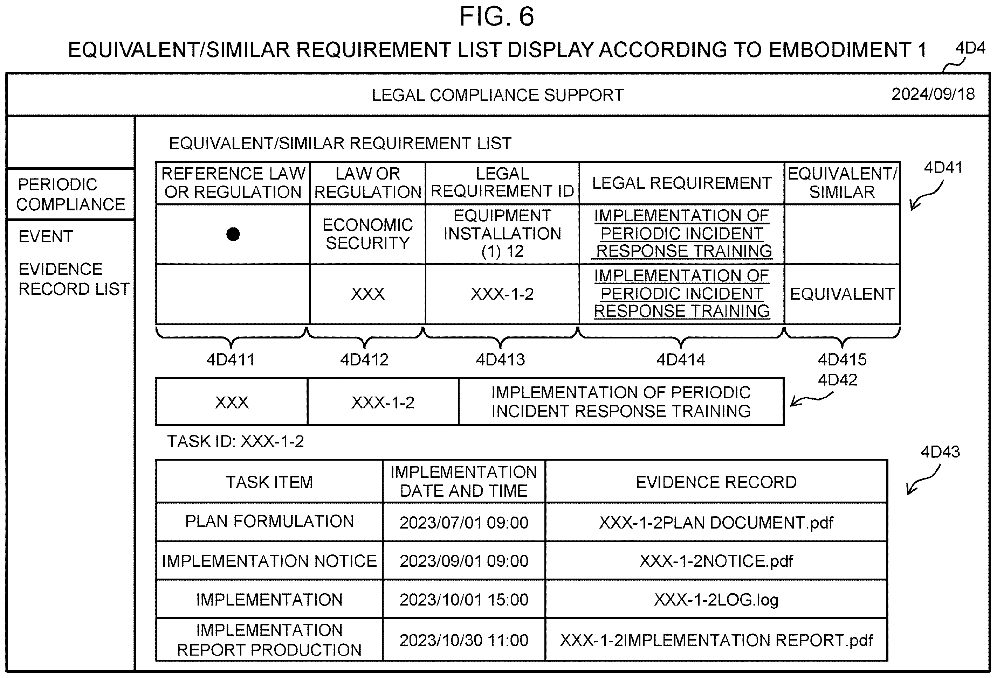

When the legal requirement 4D13 is selected by the user in the periodic compliance requirement list display 4D1, transition is made to a compliance status detail display 4D2 (FIG. 4). When the previous compliance date and time 4D14 is selected by the user, transition is made to a compliance chronology display 4D3 (FIG. 5). When the legal requirement ID 4D12 is selected, transition is made to equivalent/similar requirement list display 4D4 (FIG. 6) so that evidence record for another equivalent or similar law or regulation can be checked.

The periodic compliance requirement list display 4D1 is an example of information that is related to a legal requirement and evidence record corresponding to the legal requirement, which is retrieved based on the compliance record management table 112 and presented to the user through the output unit.

### Compliance status detail display 4D2 according to Embodiment 1

FIG. 4 is a diagram illustrating the compliance status detail display 4D2 according to Embodiment 1. Display data processing of the compliance status detail display 4D2 is executed by the processor 12. The compliance status detail display 4D2 is a screen displayed on the output unit of the user terminal 4 upon selection of the previous compliance date and time 4D14 in the periodic compliance requirement list display 4D1 by the user.

The compliance status detail display 4D2 presents a list of details (such as compliance deadline, task item, implementation date and time, and evidence record) of the status of compliance with a legal requirement for which periodic compliance is necessary during operation of the target system 3. The compliance status detail display 4D2 includes items of timeline 4D21, compliance deadline 4D22, task item 4D23, necessary evidence record 4D24, implementation date and time 4D25, and evidence record 4D26.

The timeline 4D21 is based on the timeline T12 of the legal compliance process template ID 111f corresponding to the legal requirement 4D13 selected from the periodic compliance requirement list display 4D1.
The compliance deadline 4D22 is based on the compliance deadline 4D15 and the timeline T12 (FIG. 2B) of the legal requirement 4D13 selected from the periodic compliance requirement list display 4D1. In the example illustrated in FIG. 4, since the compliance deadline 4D22 corresponding to the timeline 4D21 "expire date" corresponds to the compliance deadline 4D15 of the periodic compliance requirement list display 4D1, the compliance deadline 4D22 corresponding to the timeline 4D21 "expire date" is "2024/07/01", which is three months before the expire date "2024/10/01".

The task item 4D23 is based on the task item T11 of the legal compliance process template T1 corresponding to the legal compliance process template ID 111f corresponding to the legal requirement 4D13 selected from the periodic compliance requirement list display 4D1.
The necessary evidence record 4D24 is based on the evidence record template T13 of the legal compliance process template T1 corresponding to the legal compliance process template ID 111f corresponding to the legal requirement 4D13 selected from the periodic compliance requirement list display 4D1.

When the compliance status detail display 4D2 is displayed, the evidence record 113 stored in the storage unit 11 is analyzed and the evidence record 113 that satisfies a legal requirement is set as an evidence record candidate. An evidence record candidate that satisfies a legal requirement is the evidence record 113 including a certain number or more of essential items and optional items based on, for example, the legal requirement 111c of the legal operation management table 111 and the task item T11 and the evidence record template T13 of the legal compliance process template T1. In a case where the evidence record 113 as an evidence record candidate exists, a pull-down **"▼"** is displayed in the evidence record 4D26. When appropriate evidence record is selected from among the evidence record candidates is by the user and a registration button 4D29 is pressed, the implementation date and time 4D25 and the evidence record 4D26 are input. The implementation date and time 4D25 is extracted and input from the file of the evidence record 113. For example, AI may be used for determination of the evidence record candidate and the implementation date and time.

### Compliance chronology display 4D3 according to Embodiment 1

FIG. 5 is a diagram illustrating the compliance chronology display 4D3 according to Embodiment 1. Display data processing of the compliance chronology display 4D3 is executed by the processor 12. The compliance chronology display 4D3 is a screen displayed on the output unit of the user terminal 4 upon selection of the legal requirement 4D13 of the periodic compliance requirement list display 4D1 by the user.

The compliance chronology display 4D3 and display related to the compliance chronology display 4D3 present a list of the chronology of compliance with a legal requirement (the status of compliance with the legal requirement, a temporal sequence of implementation date and time for each task ID, a task item at selected implementation date and time, implementation date and time for each task item, and evidence record). The compliance chronology display 4D3 includes display items of task ID 4D31 and implementation date and time 4D32.

The implementation date and time 4D32 is a list of past implementation dates and times in chronological order based on implementation dates and times recorded in the file of the evidence record 113 corresponding to the legal requirement ID 4D12 corresponding to the previous compliance date and time 4D14 selected from the periodic compliance requirement list display 4D1. The task ID 4D31 of the compliance chronology display 4D3 is task identification information applied to a work, implementation of which is indicated by the evidence record 113 that records a list of implementation dates and times in chronological order in the implementation date and time 4D32.

When an implementation date and time is selected from the implementation date and time 4D32, task implementation detail display 4D39 corresponding to the selected implementation date and time is presented. The task implementation detail display 4D39 includes items of task item 4D391, implementation date and time 4D392, and evidence record 4D393. The task item 4D391 is specified based on the task item T11 of the legal compliance process template T1. The implementation date and time 4D392 is extracted and input from the file of the evidence record 113 corresponding to the evidence record template T13 corresponding to the task item 4D391. The evidence record 4D393 is the file name of the evidence record 113 corresponding to the evidence record template T13 corresponding to the task item 4D391.

The compliance chronology display 4D3 is an example of information (compliance history) that is related to a legal requirement and an evidence record corresponding to the legal requirement, which is retrieved based on the compliance record management table 112 and presented to the user through the output unit.

### Equivalent/similar requirement list display 4D4 according to Embodiment 1

FIG. 6 is a diagram illustrating the equivalent/similar requirement list display 4D4 according to Embodiment 1. Display data processing of the equivalent/similar requirement list display 4D4 is executed by the processor 12. The equivalent/similar requirement list display 4D4 is a screen displayed on the output unit of the user terminal 4 upon selection of the legal requirement ID 4D12 of the periodic compliance requirement list display 4D1 by the user.

The equivalent/similar requirement list display 4D4 includes items of list display 4D41, selected legal requirement display 4D42, and compliance status detail display 4D43.

The list display 4D41 includes items of reference law or regulation 4D411, law or regulation 4D412, legal requirement ID 4D413, legal requirement 4D414, and equivalent/similar 4D415.

The list display 4D41 displays a list of laws and regulations corresponding to legal requirements that are determined to be equivalent or similar to the legal requirement ID 4D13 of a law or regulation (reference law or regulation (record with the reference law or regulation **"•"** in FIG. 6)) selected from the periodic compliance requirement list display 4D1 and are retrieved from the legal operation management table 111. An equivalent legal requirement refers to a legal requirement that can be regarded as identical because it has a number of matching items equal to or larger than a threshold when compared with the task item T11 (refer to the legal compliance process template T1) corresponding to the reference law or regulation and because the format similarity of the corresponding evidence record template is equal to or larger than a threshold. A similar legal requirement refers to a legal requirement that can be regarded as similar because the task item T11 is partially different and not identical but has a certain number of matching items and because the format of the corresponding evidence record template is not identical but has a similarity equal to or larger than a threshold. In other words, the identity and similarity of a legal requirement are determined in accordance with the degree of matching of evidence record items.

The list display 4D41 displays, as the law or regulation 4D412, the legal requirement ID 4D413, and the legal requirement 4D414, respectively, the law or regulation name of a law or regulation corresponding to a legal requirement retrieved from the legal operation management table 111, its legal requirement ID, and the legal requirement. The equivalent/similar 4D415 of the list display 4D41 displays "equivalent" in a case where the retrieved legal requirement is equivalent, or displays "similar" in a case where the retrieved legal requirement is similar.

Upon selection of an equivalent or similar legal requirement from the list display 4D41, the selected legal requirement display 4D42 displays a selected law or regulation, a legal requirement ID, and the legal requirement. In addition, the latest compliance status detail display 4D43 corresponding to the selected law or regulation, the legal requirement ID, and the legal requirement is displayed. The compliance status detail display 4D43 is the same as the task implementation detail display 4D39 (FIG. 5) of the compliance chronology display 4D3.

The equivalent/similar requirement list display 4D4 is an example of information that is related to a legal requirement and an evidence record corresponding to the legal requirement, which is retrieved based on the compliance record management table 112 and presented to the user through the output unit.

### Main processing according to Embodiment 1

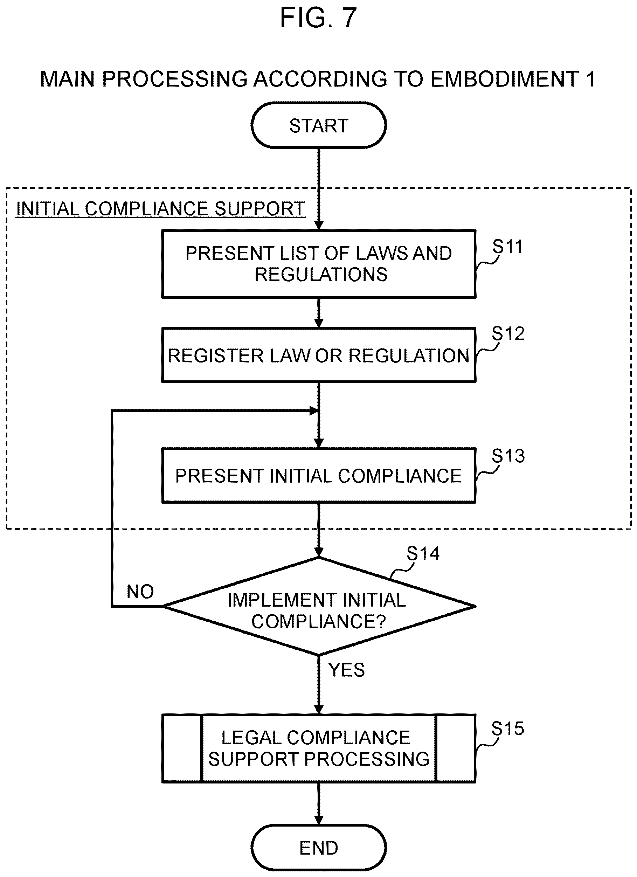

FIG. 7 is a flowchart illustrating main processing according to Embodiment 1. Periodic compliance main processing is executed at regular intervals.

First at step S11, the legal compliance support unit 12b presents a list of supportable laws or regulations registered in the laws and regulations table 115 to the user through the display screen of the user terminal 4. During the presentation, the legal compliance support unit 12b presents in such a way that the user can distinguish between laws or regulations being complied and laws or regulations yet to be complied. The legal compliance support unit 12b may retrieve, from the outside, information of laws or regulations not registered in the laws and regulations table 115.

Subsequently at step S12, the legal compliance support unit 12b retrieves, from the laws and regulations table 115, information of a law or regulation selected by the user from the presentation at step S11 and registers, in the legal operation management table 111, the law or regulation 111a, the legal requirement ID 111b, the legal requirement 111c, the legal requirement category 111d, and the legal compliance process template ID 111f for each legal requirement. The legal compliance support unit 12b also registers, in the legal compliance process template T1, the task item T11, the timeline T12, the evidence record template T13, and the evidence record retention duration T14 corresponding to the legal compliance process template ID 111f.

The law or regulation 111a and the legal requirement ID 111b are mechanically generated in accordance with predetermined rules. The legal requirement category 111d, the task item T11, and the evidence record template T13 are semi-automatically registered by allowing humans or AI to perform determination and then humans to perform confirmation.

Subsequently at step S13, the legal compliance support unit 12b refers to the laws and regulations table 115 and presents, for each legal requirement, a task item (initial compliance) to be implemented first and the evidence record 113 that is necessary.

Subsequently at step S14, the legal compliance support unit 12b determines whether to implement the initial compliance. In a case where the initial compliance is to be implemented (YES at step S14), the legal compliance support unit 12b advances processing to step S15. In a case where the initial compliance is not to be implemented (NO at step S14), the legal compliance support unit 12b returns processing to step S13. "Implementing the initial compliance" refers to a case where one is selected from the legal requirement 4D13 of the periodic compliance requirement list display 4D1 for display of the compliance status detail display 4D2.

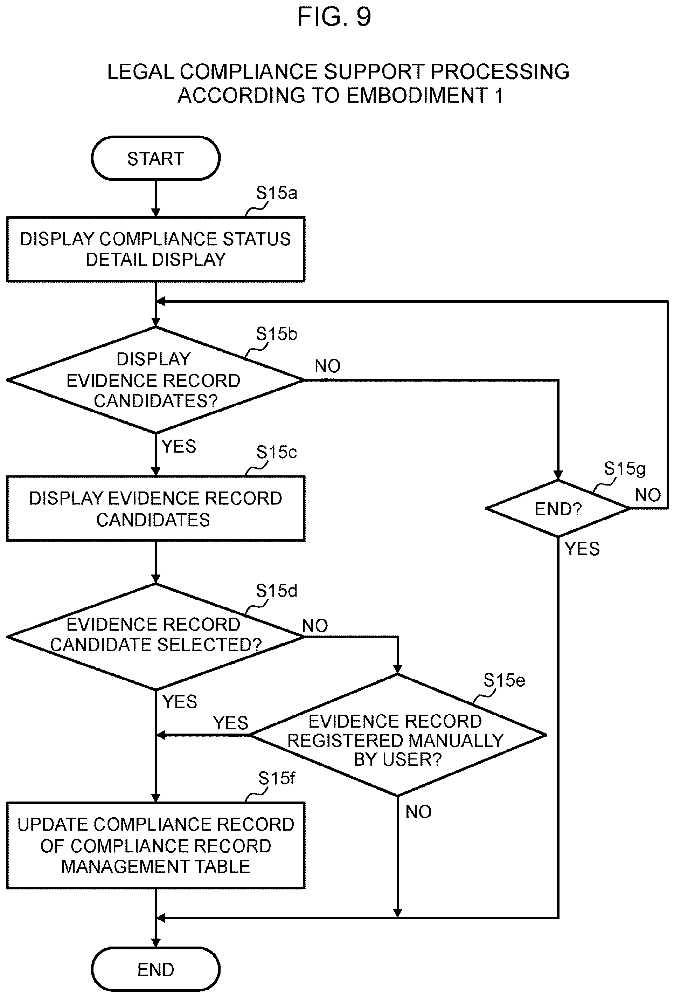

At step S15, the legal compliance support unit 12b executes periodic legal compliance support processing for supporting legal compliance that periodically occurs. For example, the legal compliance support unit 12b registers the initial compliance selected by the user, a link to the evidence record 113 that is necessary, and the like in the compliance record management table 112. The evidence record 113 is stored in the storage unit 11. For a legal requirement for which the initial compliance is completed, an initial compliance completion flag is set in the compliance record management table 112. Details of the periodic legal compliance support processing will be described later with reference to FIG. 9.

### Legal compliance notification processing according to Embodiment 1

FIG. 8 is a flowchart illustrating the legal compliance notification processing according to Embodiment 1. The legal compliance notification processing notifies, at regular intervals, legal compliance that periodically occurs. Through execution at regular intervals, the periodic event management unit 12c refers to the legal operation management table 111 at each predetermined interval such as once per day, checks the status of compliance with a legal requirement that needs to be periodically complied, and transmits a notification to the user in a case where it is within a predetermined duration before the due date or in a case where the compliance due date has been exceeded.

First at step S21, the periodic event management unit 12c refers to the legal operation management table 111 and checks the compliance due date of a periodic compliance requirement. Subsequently at step S22, the periodic event management unit 12c determines whether the current date and time exceeds the compliance due date checked at step S21. The periodic event management unit 12c advances processing to step S23 in a case where the compliance due date has been exceeded (YES at step S22), or advances processing to step S25 in a case where the compliance due date has not been exceeded (NO at step S22).

At step S23, the periodic event management unit 12c sets the progress 4D16 of the periodic compliance requirement list display 4D1 for the corresponding legal requirement to "× Delayed". Subsequently at step S24, the periodic event management unit 12c notifies a warning of the delay set at step S23 to the user.

At step S25, the periodic event management unit 12c determines whether it is within a predetermined duration before the compliance due date. The periodic event management unit 12c advances processing to step S26 in a case where it is within the predetermined duration before the compliance due date (YES at step S25), or advances processing to step S28 in a case where it is not within the predetermined duration (NO at step S25).

At step S26, the periodic event management unit 12c sets the progress 4D16 of the periodic compliance requirement list display 4D1 for the corresponding legal requirement to "△ Soon". Subsequently at step S27, the periodic event management unit 12c notifies a reminder for "Soon" set at step S23 to the user. At step S28, the periodic event management unit 12c sets the progress 4D16 of the periodic compliance requirement list display 4D1 for the corresponding legal requirement to "O Normal".

The periodic compliance requirement list display 4D1 may include an item of "implementation status" of compliance. The "implementation status" includes "started" and "not started" for the compliance, as well as, among those in "started", "implementation communicated" indicating that implementation of the compliance has been communicated to relevant parties, and "automatic" indicating that implementation of the compliance is set to be automatically executed.

### Legal compliance support processing according to Embodiment 1

FIG. 9 is a flowchart illustrating legal compliance support processing according to Embodiment 1.

First at step S15a, the legal compliance support unit 12b displays the compliance status detail display 4D2 corresponding to a legal requirement selected from the periodic compliance requirement list display 4D1 by the user. Subsequently at step S15b, the legal compliance support unit 12b determines whether to display evidence record candidates in accordance with a user operation. The legal compliance support unit 12b advances processing to step S15c in a case where evidence record candidates are to be displayed (YES at step S15b), or advances processing to step S15g in a case where evidence record candidates are not to be displayed (NO at step S15b).

At step S15c, the legal compliance support unit 12b displays, as an evidence record candidate on the compliance status detail display 4D2, any evidence record 113 that is not registered in the compliance record management table 112. Subsequently, the legal compliance support unit 12b determines whether an evidence record candidate has been selected on the display at step S15c. The legal compliance support unit 12b advances processing to step S15e in a case where an evidence record candidate has been selected (YES at step S15d), or advances processing to step S15e in a case where no evidence record candidate has been selected (NO at step S15d).

At step S15e, the legal compliance support unit 12b determines whether the user manually registers an evidence record. The legal compliance support unit 12b advances processing to step S15f in a case where the user manually registers an evidence record, or ends the periodic legal compliance support processing in a case where the user does not register an evidence record.

At step S15f, the legal compliance support unit 12b registers and updates, for the selected evidence record 113 (in the case of YES at step S15d) or the manually input evidence record 113 (in the case of YES at step S15e), a compliance record (the task ID 112c, the task item 112d, the implementation date and time 112e, the implementer 112f, and the evidence record 112g) of the corresponding legal requirement of the compliance record management table 112.

At step S15g, the legal compliance support unit 12b determines whether to end display of the compliance status detail display 4D2. The legal compliance support unit 12b ends the legal compliance support processing in a case of ending display of the compliance status detail display 4D2 (YES at step S15g), or returns processing to step S15b in a case of continuing display of the compliance status detail display 4D2 (NO at step S15g).

### Effects of Embodiment 1

According to Embodiment 1, during periods when periodic legal compliance is necessary in activities of a business entity or the like, it is possible to reduce a compliance burden on the user by indicating implementation deadlines, specific compliance tasks, and necessary evidence records. Moreover, it is possible to reduce audit compliance burden by managing a legal requirement, a compliance task, and an evidence record in association.

### Embodiment 2

In Embodiment 2, an example will be described below in which an evidence record for legal compliance implemented upon event occurrence is managed. Main processing according to Embodiment 2 is the same as the main processing (FIG. 7) according to Embodiment 1, and legal compliance support processing according to Embodiment 2 (step S15) is the same as the legal compliance support processing according to Embodiment 1 (FIG. 9). In Embodiment 2, only the legal compliance notification processing is different from Embodiment 1.

### Event compliance requirement list display 4D5 according to Embodiment 2

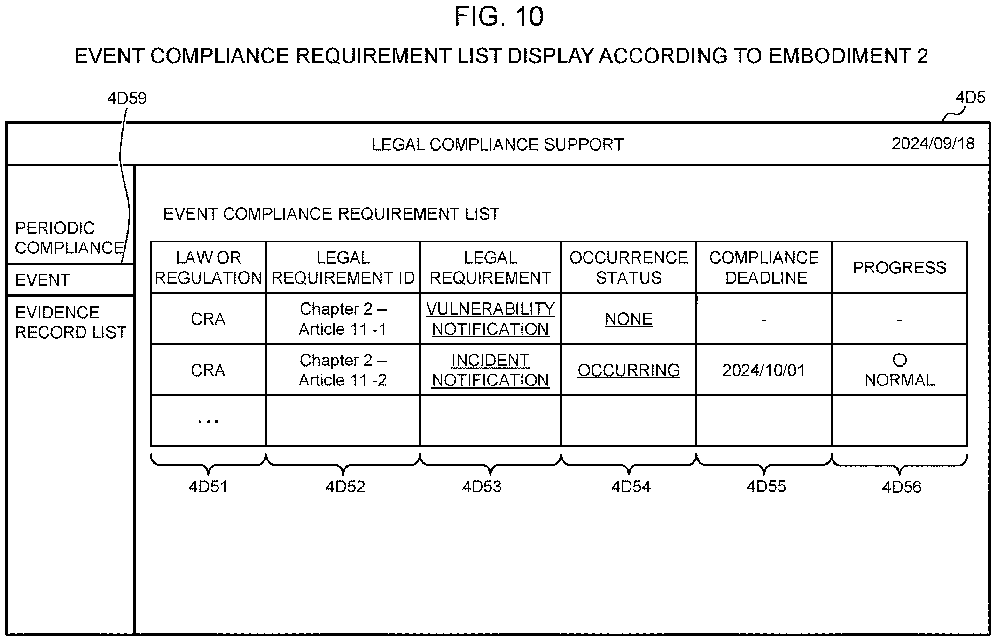

FIG. 10 is a diagram illustrating event compliance requirement list display 4D5 according to Embodiment 2. Display data processing of the event compliance requirement list display 4D5 is executed by the processor 12. The event compliance requirement list display 4D5 is a screen displayed on the output unit of the user terminal 4 upon selection of an event compliance tab 4D59 by the user.

The event compliance requirement list display 4D5 notifies, in response to a notification from an external system based on event occurrence, the user through the output unit that compliance with a law or regulation is required.

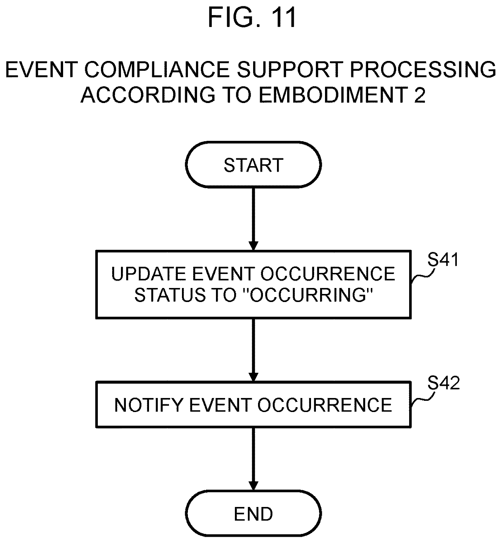

The event compliance requirement list display 4D5 presents a list of legal requirements for which events are output from the security compliance system 2 and compliance is necessary. The event compliance requirement list display 4D5 includes items of law or regulation 4D51, legal requirement ID 4D52, legal requirement 4D53, occurrence status 4D54, compliance deadline 4D55, and progress 4D56. The law or regulation 4D51, the legal requirement ID 4D52, the legal requirement 4D53, the compliance deadline 4D55, and the progress 4D56 are the same as the law or regulation 4D11, the legal requirement ID 4D12, the legal requirement 4D13, the compliance deadline 4D15, and the progress 4D16 of the periodic compliance requirement list display 4D1 (FIG. 3). The occurrence status 4D54 is input by event compliance support processing (FIG. 11) to be described later. As for the compliance deadline 4D55 and the progress 4D56, only records with the occurrence status 4D54 "occurring" are input.

The event compliance requirement list display 4D5 is an example of information that is related to a legal requirement and an evidence record corresponding to the legal requirement, which is retrieved based on the compliance record management table 112 and presented to the user through the output unit.

### Event compliance support processing according to Embodiment 2

FIG. 11 is a flowchart illustrating the event compliance support processing according to Embodiment 2. The event compliance support processing is executed each time an event for which legal compliance is necessary occurs.

First at step S41, upon receiving occurrence of an event for which legal compliance is necessary, the event reception unit 12a updates the occurrence status 4D54 of an event of the corresponding legal requirement in the event compliance requirement list display 4D5 to "occurring". Subsequently at step S11, the legal compliance support unit 12b notifies the occurrence of the event for which legal compliance is necessary (for which the occurrence status 4D54 is "occurring") to the user.

### Effects of Embodiment 2

According to Embodiment 2, when legal compliance is necessary upon event occurrence in activities of a business entity or the like, it is possible to reduce a compliance burden on the user by indicating an implementation deadline, a specific compliance task, and a necessary evidence record.

### Embodiment 3

In Embodiment 3, irrespective of periodic compliance (Embodiment 1) and event compliance (Embodiment 2), a list of the statuses of compliance with legal requirements is displayed for selected laws or regulations.

### Compliance evidence record list display 4D6 according to Embodiment 3

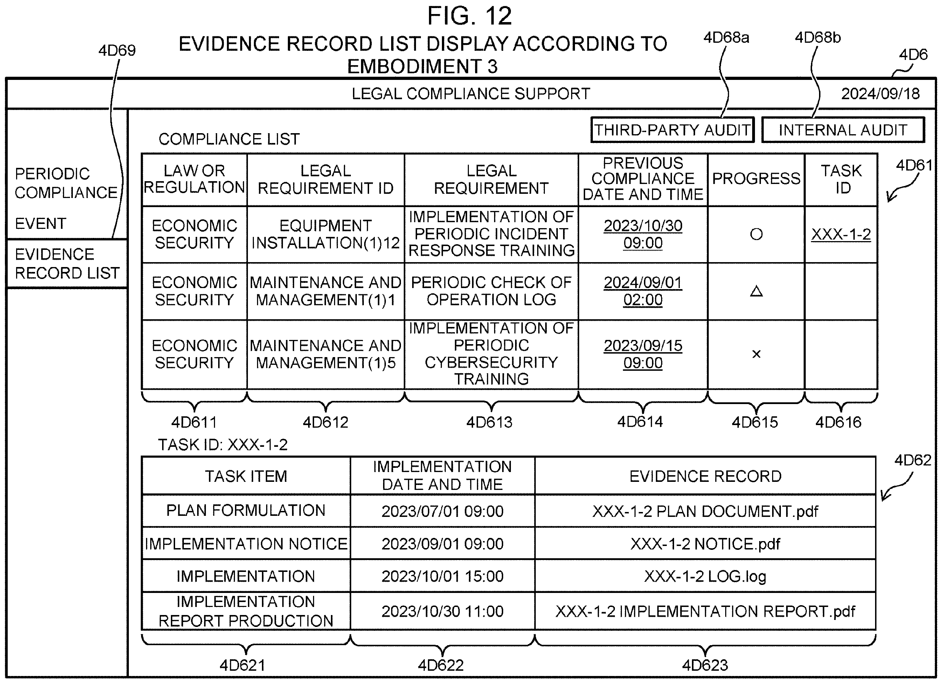

FIG. 12 is a diagram illustrating compliance evidence record list display 4D6 according to Embodiment 3. Display data processing of the compliance evidence record list display 4D6 is executed by the processor 12. The compliance evidence record list display 4D6 is a screen displayed on the output unit of the user terminal 4 upon selection of a periodic compliance tab 4D69 by the user.

The compliance evidence record list display 4D6 includes compliance list display 4D61 and evidence record display 4D62.

The compliance list display 4D61 presents a list of laws or regulations selected by the user and tasks ID associated with the laws or regulations. The compliance list display 4D61 includes display items of law or regulation 4D611, legal requirement ID 4D612, legal requirement 4D613, previous compliance date and time 4D614, progress 4D615, and task ID 4D616.

The law or regulation 4D611, the legal requirement ID 4D612, the legal requirement 4D613, the previous compliance date and time 4D614, and the progress 4D615 are obtained in the same manner as the periodic compliance requirement list display 4D1 (FIG. 3) of Embodiment 1 in a case where the legal requirement requires periodic compliance. The law or regulation 4D611, the legal requirement ID 4D612, and the legal requirement 4D613 are obtained in the same manner as the event compliance requirement list display 4D5 (FIG. 10) of Embodiment 2 in a case where the legal requirement requires compliance upon event occurrence. As for the task ID 4D616, the compliance record management table 112 (FIG. 2C) is referred and the corresponding task ID 112c is input for each law or regulation 4D611 and legal requirement ID 4D612.

When the task ID 4D616 is selected, the evidence record display 4D62 corresponding to the selected task ID 4D616 is displayed. The evidence record display 4D62 includes items of task item 4D621, implementation date and time 4D622, and evidence record 4D623. As for the task item 4D621, the task item 112d of the compliance record management table 112 (FIG. 2C) is input. As for the implementation date and time 4D622, the implementation date and time 112e of the compliance record management table 112 is input. As for the evidence record 4D623, the evidence record 112g of the compliance record management table 112 is input.

In a case of a third-party audit where the user is a third party other than an internal member of the organization, third-party audit display 4D68a is pressed and inverted and the evidence record 4D623 is hidden or locked for operation, and accordingly, file browsing of the evidence record 113 becomes impossible. In a case of an internal audit where the user is an internal member of the organization, internal audit display 4D68b is pressed and inverted and the evidence record 4D623 is displayed, and accordingly, file browsing of the evidence record 113 becomes possible.

Specifically, in the compliance evidence record list display 4D6, disclosure and non-disclosure of the content of the evidence record through the output unit are controlled. In addition, in the compliance evidence record list display 4D6, when the third-party audit display 4D68a is pressed, it is determined whether the content of the evidence record includes sensitive information. The sensitive information is masked (not disclosed) in output from the output unit in a case where it is determined that the content of the evidence record includes sensitive information, or the sensitive information is disclosed in output from the output unit in a case where it is determined that the content of the evidence record includes no sensitive information. The control of disclosure and non-disclosure of the content of the evidence record is not limited to pressing and releasing of the third-party audit display 4D68a and the internal audit display 4D68b, but may be authority control of a login user based on an authority list.

The compliance evidence record list display 4D6 is an example of information that is related to a legal requirement and an evidence record corresponding to the legal requirement, which is retrieved based on the compliance record management table 112 and presented to the user through the output unit.

### Evidence record list display processing according to Embodiment 3

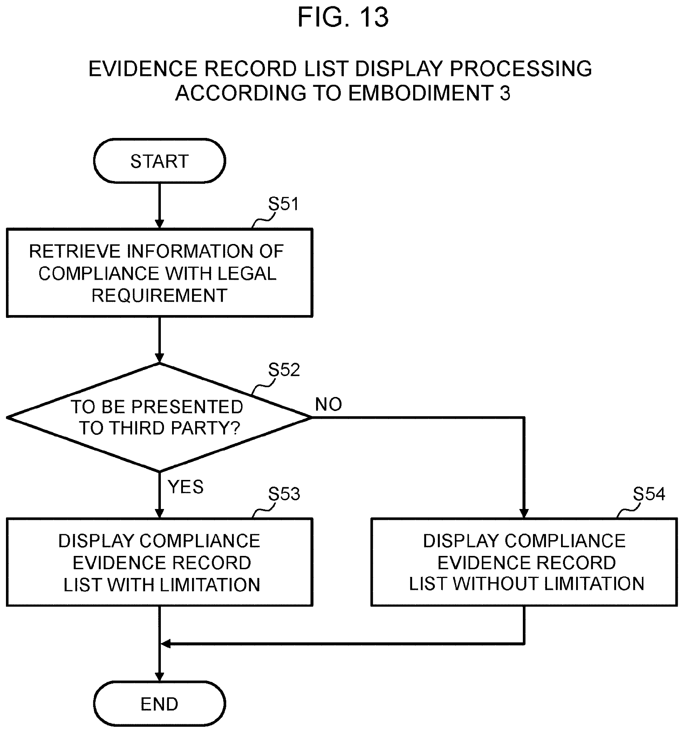

FIG. 13 is a flowchart illustrating evidence record list display processing according to Embodiment 3.

First at step S51, the evidence record presentation unit 12e refers to the compliance record management table 112 (FIG. 2C) and retrieves information of a compliance record related to a selected legal requirement and information related to an evidence record. Subsequently at step S52, the evidence record presentation unit 12e determines whether to be presented to a third party (the third-party audit display 4D68a is in the inverted display state). The evidence record presentation unit 12e advances processing to step S53 in a case of presentation to a third party (YES at step S52), or advances processing to step S54 in a case of presentation to an internal member (the internal audit display 4D68b is in the inverted display state) (NO at step S52).

At step S53, the evidence record presentation unit 12e displays the evidence record display 4D62 with access restriction on specific information, such as prohibition of browsing of the evidence record 113. At step S54, the evidence record presentation unit 12e displays the evidence record display 4D62 without access restriction on specific information, such as prohibition of browsing of the evidence record 113.

### Effects of Embodiment 3

According to Embodiment 3, it is possible to easily present to a third party that the implementation process of legal compliance is appropriately executed and an appropriate evidence record is appropriately held.

Although some embodiments are described above, these are merely examples for description of the present invention, and it is not intended to limit the scope of the present invention to these embodiments. The present invention may be implemented in various other kinds of forms such as forms in which part of the configurations of the above-described embodiments is omitted, forms in which at least part of the configurations is replaced, forms in which configurations are added, and forms in which some or all of the embodiments are combined.

## Claims

1. A legal compliance support system for supporting compliance with a law or regulation, the legal compliance support system comprising a processor and a storage unit that stores evidence record indicating that compliance with the law or regulation has been implemented, wherein the processor
manages legal operation management information associating a legal requirement, which defines an item to be implemented for compliance with the law or regulation, with evidence record information related to the evidence record necessary to indicate that compliance with the legal requirement has been implemented,
analyzes the evidence record retained in the storage unit and presents the evidence record that satisfies the legal requirement as an evidence record candidate to a user through an output unit,
receives the evidence record selected from the evidence record candidate by the user, and
associates the legal requirement satisfied by the evidence record with the evidence record selected from the evidence record candidate by the user and registers the association as compliance record management information.

2. The legal compliance support system according to claim 1, wherein the processor retrieves, based on the compliance record management information, the legal requirement and information related to the evidence record corresponding to the legal requirement and presents the legal requirement and the information to the user through the output unit.

3. The legal compliance support system according to claim 1, wherein the processor
manages a compliance deadline of the legal requirement in the legal operation management information, and
presents a notification related to the compliance deadline to the user through the output unit based on the legal operation management information.

4. The legal compliance support system according to claim 1, wherein the processor retrieves, from the compliance record management information, a history of the compliance corresponding to the legal requirement and presents the history to the user through the output unit.

5. The legal compliance support system according to claim 1, wherein the processor retrieves, from the legal operation management information, information related to .the law or regulation having a legal requirement matching or similar to the legal requirement, retrieves, from the compliance record management information, a history of the compliance corresponding to the law or regulation related to the retrieved information, and presents the history to the user through the output unit.

6. The legal compliance support system according to claim 3, wherein the processor presents, at regular intervals, a notification related to the compliance deadline to the user through the output unit based on the legal operation management information.

7. The legal compliance support system according to claim 1, wherein the processor notifies, in response to a notification from an external system based on occurrence of an event, the user through the output unit that compliance with the law or regulation is required.

8. The legal compliance support system according to claim 1, wherein the processor controls disclosure and non-disclosure of content of the evidence record through the output unit.

9. The legal compliance support system according to claim 8, wherein the processor
determines whether the content of the evidence record includes sensitive information, and
makes the sensitive information undisclosed in an output from the output unit when it is determined that the content of the evidence record includes the sensitive information.

10. A legal compliance support method executed by a legal compliance support system for supporting compliance with a law or regulation, wherein
the legal compliance support system comprising a processor and a storage unit that stores evidence record indicating that compliance with the law or regulation has been implemented, and
the legal compliance support method includes processes in which the processor
manages legal operation management information associating a legal requirement, which defines an item to be implemented for compliance with the law or regulation, with evidence record information related to the evidence record necessary to indicate that compliance with the legal requirement has been implemented,
analyzes the evidence record retained in the storage unit and presents the evidence record that satisfies the legal requirement as an evidence record candidate to a user through an output unit,
receives the evidence record selected from the evidence record candidate by the user, and
associates the legal requirement satisfied by the evidence record with the evidence record selected from the evidence record candidate by the user and registers the association as compliance record management information.
